# EUROPEAN PATENT SPECIFICATION

(11) **EP 3 758 444 B1**
(45) Date of publication and mention of the grant of the patent: **06.07.2022**
(21) Application number: 19757120.1
(22) Date of filing: 09.01.2019
(51) Int. Cl.: H05B 6/14, D02J 13/00, F16C 13/00

(54) **INDUCTION HEATING ROLLER AND SPUN YARN TAKE-UP MACHINE**
INDUKTIONSHEIZWALZE UND SPINNFADENAUFWICKELMASCHINE
ROULEAU CHAUFFANT PAR INDUCTION ET DISPOSITIF DE TENSION DE FILÉS

(30) Priority: 23.02.2018 JP 2018030814
(43) Date of publication of application: 30.12.2020
(73) Proprietor: TMT Machinery, Inc., Osaka-shi, Osaka 541-0041 (JP)
(72) Inventor: KAGATA, Kakeru, Kyoto-shi, Kyoto 612-8686 (JP)
(74) Representative: Hoffmann Eitle
(86) International application number: PCT/JP2019/000342
(87) International publication number: WO 2019/163314

(56) References cited:
- WO-A1-2017/062251
- DE-A1- 19 613 433
- JP-A- 2001 126 856
- JP-A- 2005 222 745
- JP-B1- S4 836 216
- US-A1- 2012 308 278

## Description

### [Technical Field]

The present invention relates to an induction heating roller and a spun yarn take-up machine.

### [Background]

For example, as shown in Patent Literature 1, an induction heating roller which is configured to heat a roller surface by induction heating using a coil has been known. In such an induction heating roller, it is difficult to arrange an amount of heat generated by the induction heating so as to be uniform in an axial direction, with the result that the temperature of the roller surface tends to be uneven in the axial direction. The induction heating roller of Patent Literature 1 has a jacket chamber in which a gas-liquid two-phase heating medium is enclosed and which extends in the axial direction, at a roller main body. Because this jacket chamber functions as a heat pipe, the temperature of the roller surface is equalized in the axial direction. Another example of the prior art is disclosed in DE19613433.

### [Citation List]

### [Patent Literatures]

[PTL 1]
Japanese Laid-Open Patent Publication No. 2003-100437

### [Summary of the Invention]

### [Technical Problem]

In the structure in which a heat pipe (jacket chamber) is provided in a roller main body as in Patent Literature 1, the roller main body is required to be thick in order to accommodate the heat pipe therein. As a result, the heat capacity of the roller main body is large, and hence a roller surface cannot be effectively heated.

In view of the above, the present inventors conceived an idea of providing a heat equalizer which is higher in heat conduction than the roller main body to be in contact with an inner circumferential surface of the roller main body which is induction-heated. Because the heat equalizer in contact with the roller main body functions as the heat pipe, the temperature distribution in the axial direction of the roller main body which is heated by the induction heating is equalized. In addition to that, the thickness of the roller main body is reduced, as compared to a case in which the heat pipe is provided at the roller main body. As a result, the roller surface is efficiently heated.

Metals such as copper and aluminum which have relatively high heat conduction may be used as a material of the heat equalizer. However, copper and aluminum, etc., are conductive metals. If an electrically conductive material is used as the material of the heat equalizer, an eddy current which is generated at the roller main body by means of electromagnetic induction flows also in the heat equalizer, with the result that the heat equalizer generates heat. Because the heat equalizer generates heat, the roller surface cannot be effectively heated.

An object of the present invention is to provide an induction heating roller and a spun yarn take-up machine which suppress an eddy current from flowing in an electrically conductive heat equalizer and which effectively heat a roller surface.

### [Solution to Problem]

A first aspect of the present invention provides an induction heating roller including: a coil; a heating target which is cylindrical in shape, which is provided radially outside the coil, and which is induction-heated by the coil; and at least one heat equalizer which is made of an electrically conductive material which is higher in heat conductivity than at least an inner circumferential surface of the heating target, the at least one heat equalizer extending in an axial direction of the heating target, and the at least one heat equalizer being provided so as to make contact with the inner circumferential surface of the heating target, and the at least one heat equalizer being discontinuous in the circumferential direction because of at least one discontinuous area which is provided in a circumferential direction of the heating target and which extends in a direction which intersects with the circumferential direction.

In the present invention, the heat equalizer is discontinuous in the circumferential direction of the heating target because of the discontinuous area. It is therefore possible to suppress an eddy current from flowing along the circumferential direction, at the part in which the heat equalizer is discontinuous in the circumferential direction. As a result, the heat equalizer is unlikely to generate heat, so that a roller surface (surface of the heating target) is effectively heated.

According to a second aspect of the invention, the induction heating roller of the first aspect is arranged such that the at least one heat equalizer is a cylindrical member in which at least one slit is formed at a part corresponding to the at least one discontinuous area.

In the present invention, the slit formed in the cylindrical member functions as the discontinuous area. It is therefore possible to suppress the eddy current from flowing along the circumferential direction, at the part in which the slit of the heat equalizer is formed.

According to a third aspect of the invention, the induction heating roller of the second aspect is arranged such that the at least one heat equalizer is continuous throughout an entire circumference of the circumferential direction in at least one of both end portions in the axial direction.

In the present invention, the slit formed in the cylindrical heat equalizer is not formed across the entire length of the heat equalizer in the axial direction, and is not formed in at least one of both end portions of the heat equalizer. Therefore, the shape of the heat equalizer is easily maintained, and the mounting of the heat equalizer is facilitated.

According to a fourth aspect of the invention, the induction heating roller of the third aspect includes two or more slits.

When the cylindrical heat equalizer with the slits has the part which is continuous throughout the entire circumference of the circumferential direction, heat is generated at this part of the cylindrical heat equalizer, because the eddy current flows in the part in the circumferential direction. In this regard, an area from which heat is generated increases in size in the circumferential direction away from the slits. In the present invention, it is possible to suppress the increase in size of the area from which the heat equalizer generates heat, by providing the slits.

According to a fifth aspect of the invention, the induction heating roller of the second aspect is arranged such that the at least one slit extends across an entire length of the heat equalizer in the axial direction.

In the present invention, the slit functioning as the discontinuous area extends across the entire length of the heat equalizer in the axial direction so that the heat equalizer is discontinuous in the circumferential direction in all area regarding the axial direction. It is therefore possible to suppress the eddy current from flowing in the circumferential direction in the entirety of the heat equalizer in the axial direction. Because of this, the heat equalizer is further unlikely to generate heat, so that the roller surface (surface of the heating target) is heated further effectively.

According to a sixth aspect of the invention, the induction heating roller of the first aspect includes two or more heat equalizers which are apart from each other in the circumferential direction, wherein the at least one discontinuous area is provided between two of the two or more heat equalizers which are adjacent in the circumferential direction.

In the present invention, the discontinuous area is provided between two of the heat equalizers which are adjacent in the circumferential direction so that the heat equalizers are discontinuous in the circumferential direction. It is therefore possible to suppress the eddy current from flowing along the circumferential direction in the heat equalizers.

According to a seventh aspect of the invention, the induction heating roller of any one of the first to sixth aspects is arranged such that a spacer made of an insulating material is provided in the at least one discontinuous area.

In the present invention, the shape of the heat equalizer is easily maintained and the mounting of the heat equalizer is facilitated by providing the spacer at the discontinuous area which is a gap formed in the heat equalizer. The spacer is formed of the insulating material, and this makes it possible to maintain the effect of suppressing the eddy current from flowing in the circumferential direction of the heat equalizer.

According to an eighth aspect of the invention, the induction heating roller of any one of the first to seventh aspects is arranged such that an insulation film which is lower in heat resistance than the heating target and which is insulating is provided on a contact surface of the at least one heat equalizer where the at least one heat equalizer makes contact with the heating target.

In the present invention, it is possible to prevent the eddy current which is generated in the heating target by electromagnetic induction from flowing in the heat equalizer, because of the insulating insulation film. It is therefore possible to further suppress the eddy current from flowing in the heat equalizer. The heat resistance of the insulation film is relatively low because the thickness of the insulation film is thin. Therefore, the insulation film can fill the gap between the heating target and the heat equalizer by the insulation film so as to increase the heat conduction between the heating target and the heat equalizer.

According to a ninth aspect of the invention, the induction heating roller of any one of the first to eighth aspects is arranged such that the at least one heat equalizer is lower in relative permeability than the heating target.

In the present invention, magnetic fluxes are less likely to pass through the heat equalizer than to pass through the heating target. It is therefore possible to restrain the eddy current from being generated in the heat equalizer as the magnetic fluxes pass through the heat equalizer.

A tenth aspect of the invention provides a spun yarn take-up machine including the induction heating roller of any one of the first to ninth aspects, wherein, yarns are wound onto a surface of the induction heating roller so as to be aligned in the axial direction.

The induction heating roller included in the spun yarn take-up machine of the present invention can suppress the eddy current from flowing in the heat equalizer, restrain the heat equalizer from generating heat, and effectively heat the roller surface (surface of the heating target), as described above. Therefore, the yarns wound onto the induction heating roller in the spun yarn take-up machine are effectively heatable.

### [Brief Description of Drawings]

FIG. 1 is a schematic diagram of a spun yarn take-up machine including induction heating rollers of a first embodiment of the present invention.
FIG. 2 is a cross section of the induction heating roller of the first embodiment of the present invention, which is taken along an axial direction.
FIG. 3 is a cross section of an outer cylindrical portion and a heat equalizer shown in FIG. 2, which is taken along a direction orthogonal to the axial direction.
FIG. 4 is a perspective view of the heat equalizer shown in FIG. 2.
FIG. 5 is a cross section of an outer cylindrical portion and heat equalizers of an induction heating roller of a second embodiment of the present invention, which is taken along a direction orthogonal to an axial direction.
FIG. 6 is a perspective view of the heat equalizers shown in FIG. 5.
FIG. 7 is a perspective view of a heat equalizer of an induction heating roller in a first modification of the first embodiment.
FIG. 8 is a perspective view of a heat equalizer of an induction heating roller in a second modification of the first embodiment.
FIG. 9 is a perspective view of a heat equalizer of an induction heating roller in a third modification of the first embodiment.
FIG. 10 is a perspective view of heat equalizers of an induction heating roller in one modification of the second embodiment.

### [Preferred Embodiment of Invention]

### <First Embodiment>

The following will describe a first embodiment of the present invention with reference to figures.

### (Outline of Spun Yarn Take-Up Machine 1)

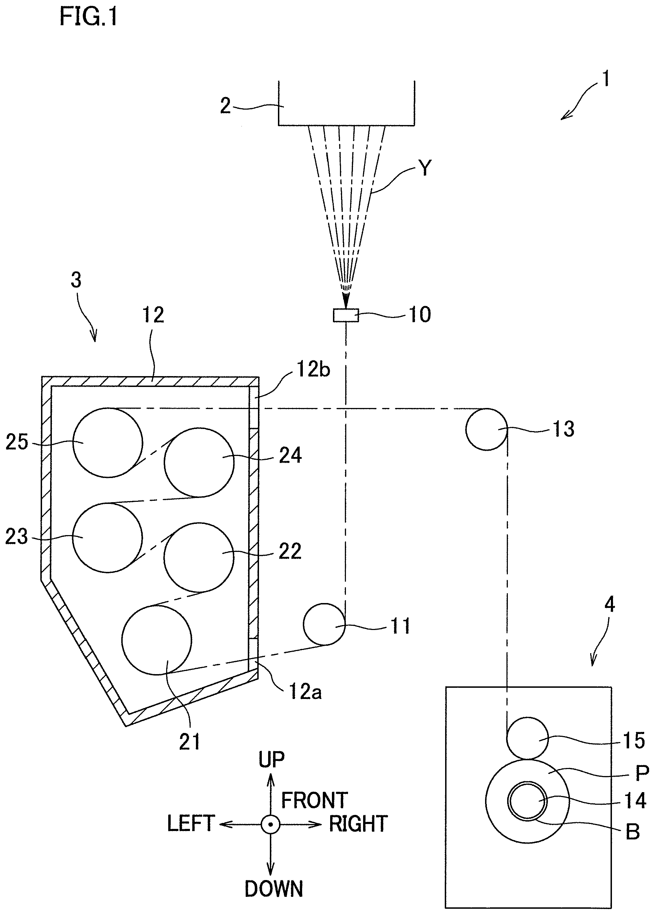

FIG. 1 is a schematic diagram of a spun yarn take-up machine 1 including induction heating rollers of the present embodiment. As shown in FIG. 1, the spun yarn take-up machine 1 is configured to draw plural (six in this embodiment) yarns Y spun out from a spinning apparatus 2 by a spun yarn drawing device 3, and then to wind the yarns Y by a yarn winding apparatus 4. Hereinafter, explanations will be given with reference to the directions shown in the figures.

The spinning apparatus 2 is configured to generate the yarns Y by continuously spinning out a molten fibrous material such as polyester. To the yarns Y spun out from the spinning apparatus 2, oil is applied at an oil guide 10. The yarns Y are then sent to the spun yarn drawing device 3 via a guide roller 11.

The spun yarn drawing device 3 is an device for drawing the yarns Y, and is provided below the spinning apparatus 2. The spun yarn drawing device 3 includes plural (five in this embodiment) godet rollers 21 to 25 housed in a thermal insulation box 12. Each of the godet rollers 21 to 25 is one of the induction heating rollers which are rotationally driven by respective motors and which are induction-heated by respective coils. Each of the godet rollers 21 to 25 is provided so that the axis thereof is parallel to a front-rear direction, and the yarns Y are wound to be lined up in a direction along the axis. At a lower part of a right side portion of the thermal insulation box 12, an inlet 12a is formed to introduce the yarns Y into the thermal insulation box 12. At an upper part of the right side portion of the thermal insulation box 12, an outlet 12b is formed to take the yarns Y out from the thermal insulation box 12. The yarns Y are wound onto each of the godet rollers 21 to 25 at a winding angle of less than 360 degrees. The yarns Y are wound onto the godet rollers 21 to 25 in order, from the lowest godet roller 21.

The lower three godet rollers 21 to 23 are preheating rollers for preliminarily heating the yarns Y before drawing them. The roller surface temperature of each of these rollers is arranged to be equal to or higher than the glass transition temperature of the yarns Y (e.g., set at about 90 to 100 degrees centigrade) . Meanwhile, the upper two godet rollers 24 and 25 are conditioning rollers for thermally setting the drawn yarns Y. The roller surface temperature of each of these godet rollers 24 and 25 is arranged to be higher than the roller surface temperatures of the lower three godet rollers 21 to 23 (e.g., set at about 150 to 200 degrees centigrade) . The yarn feeding speeds of the upper two godet rollers 24 and 25 are higher than those of the lower three godet rollers 21 to 23.

The yarns Y introduced into the thermal insulation box 12 through the inlet 12a are, to begin with, preliminarily heated to a drawable temperature while being transferred by the godet rollers 21 to 23. The preliminarily-heated yarns Y are drawn on account of a difference in yarn feeding speed between the godet roller 23 and the godet roller 24. Subsequently, the yarns Y are further heated while being transferred by the godet rollers 24 and 25, with the result that the drawn state is thermally set. The yarns Y having been drawn in this way go out from the thermal insulation box 12 through the outlet 12b.

The yarns Y drawn by the spun yarn drawing device 3 are sent to the yarn winding apparatus 4 via the guide roller 13. The yarn winding apparatus 4 is an apparatus for winding the yarns Y, and is provided below the spun yarn drawing device 3. The yarn winding apparatus 4 includes members such as a bobbin holder 14 and a contact roller 15. The bobbin holder 14 is cylindrical in shape, and extends in the front-rear direction. The bobbin holder 14 is rotationally driven by an unillustrated motor. To the bobbin holder 14, bobbins B are attached along the axial direction to be side by side. By rotating the bobbin holder 14, the yarn winding apparatus 4 simultaneously winds the yarns Y onto the bobbins B, so as to produce packages P. The contact roller 15 makes contact with the surfaces of the packages P to adjust the shape of each package P by applying a predetermined contact pressure to each package P.

### (Structure of Induction Heating Roller 30)

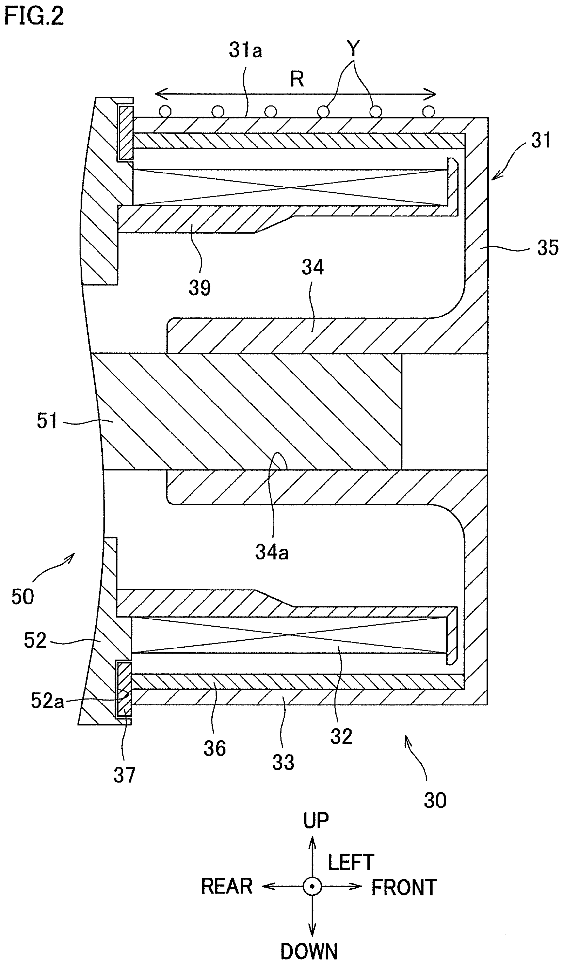

FIG. 2 is a cross section of an induction heating roller 30 of the present invention, which is taken along an axial direction. In FIG. 2, only a part of an output shaft 51 and a part of a housing 52 are shown in a motor 50 to which the induction heating roller 30 is connected. In this regard, the induction heating roller 30 shown in FIG. 2 is applied to all of the godet rollers 21 to 25 in FIG. 1. Hereinafter, the axial direction (front-rear direction) of the induction heating roller 30 is simply referred to as an "axial direction". A circumferential direction of the induction heating roller 30 is simply referred to as a "circumferential direction".

The induction heating roller 30 includes a roller main body 31 which is cylindrical in shape and which extends along the axial direction, and a coil 32 provided inside the roller main body 31. The induction heating roller 30 is configured to heat an outer circumferential surface 31a (hereinafter, it is referred to as a "roller surface 31a") of the roller main body 31 by induction heating using the coil 32, so as to heat the yarns Y wound on the roller surface 31a.

The roller main body 31 is made of carbon steel which is a magnetic body and a conductor. The roller main body 31 includes an outer cylindrical part 33 and a shaft center part 34 which are cylindrical in shape and which extend along the axial direction, and a disc-shaped end face part 35 connecting a front end portion of the outer cylindrical part 33 and a front end portion of the shaft center part 34. The outer cylindrical part 33 is provided radially outside the coil 32. The shaft center part 34 is provided radially inside the coil 32. The roller main body 31 has an opening at its rear end. The outer cylindrical part 33 and the shaft center part 34 and the end face part 35 are integrally formed. A cylindrical heat equalizer 36 extending along the axial direction is provided radially inside the outer cylindrical part 33 of the roller main body 31 and radially outside the coil 32.

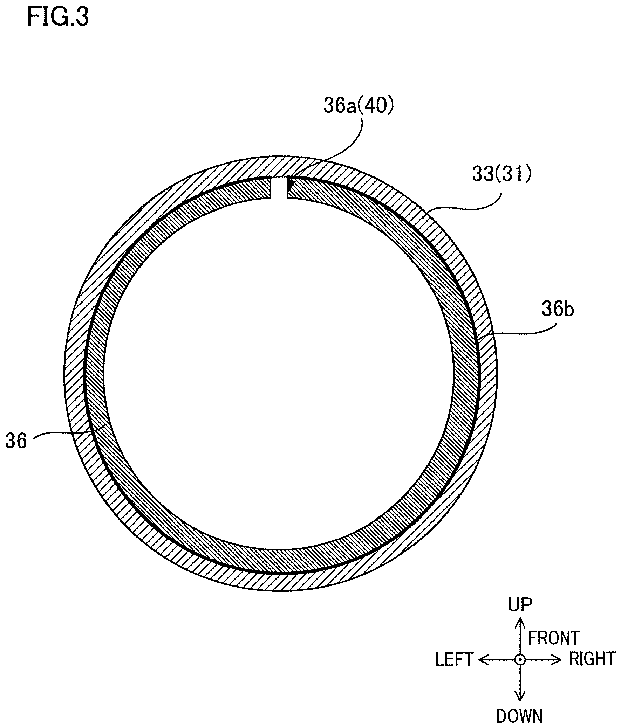

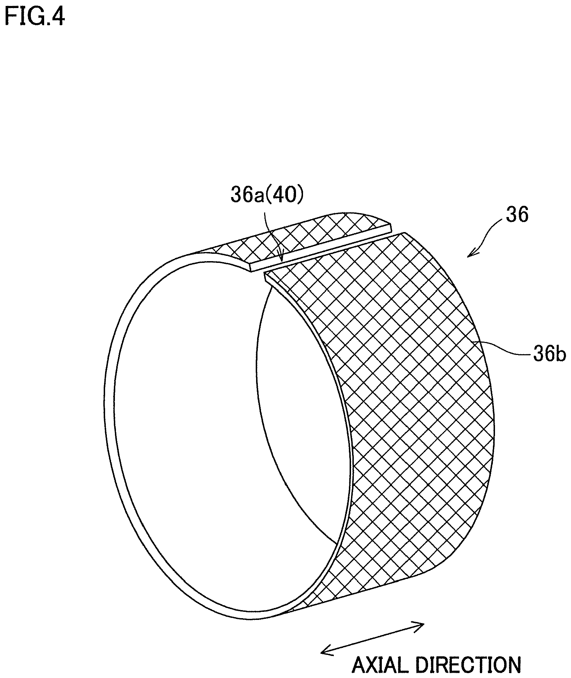

FIG. 3 is a cross section of an outer cylindrical portion 33 and a heat equalizer 36 shown in FIG. 2, which is taken along a direction orthogonal to the axial direction. FIG. 4 is a perspective view of the heat equalizer 36 shown in FIG. 2. As shown in FIG. 3 and FIG. 4, a slit 36a extending in the axial direction is formed at the heat equalizer 36. The slit 36a extends across the entire length in the axial direction of the heat equalizer 36. The slit 36a functions as a discontinuous area 40 in which the heat equalizer 36 is not provided. In other words, the heat equalizer 36 is discontinuous in the circumferential direction because the slit 36a is formed.

The heat equalizer 36 is made of an electrically conductive material such as aluminum and copper, which is higher in heat conductivity than the carbon steel forming the roller main body 31. The material forming the heat equalizer 36 is lower in relative permeability than the carbon steel forming the roller main body 31. An insulation film 36b is provided on the entire outer circumferential surface of the heat equalizer 36. The outer circumferential surface of the heat equalizer 36 is the contact surface where the outer circumferential surface of the heat equalizer 36 makes contact with the outer cylindrical part 33. The insulation film 36b is made of an insulating material which is lower in heat resistance than the carbon steel forming the roller main body 31. Silicon paste, adhesive, and a resin thin film sheet, etc., may be used as the material of the insulation film 36b.

The outer diameter of the heat equalizer 36 is identical with the inner diameter of the outer cylindrical part 33. (Strictly speaking, the outer diameter of the heat equalizer 36 is slightly smaller than the inner diameter of the outer cylindrical part 33 so that the heat equalizer 36 can be inserted into the outer cylindrical part 33.) Because of this, the outer circumferential surface (insulation film 36b) of the heat equalizer 36 makes contact with almost the entire inner circumferential surface of the outer cylindrical part 33, in a state in which the heat equalizer 36 is housed in the roller main body 31. As shown in FIG. 2, if an axially-extending region where the yarns Y are wound on the roller surface 31a is a wound region R, the heat equalizer 36 is provided throughout a range including the wound region R in the axial direction.

The heat equalizer 36 can be inserted into the outer cylindrical part 33 from the opening provided at the rear end of the roller main body 31. The length in the axial direction of the heat equalizer 36 is substantially identical with the length of the outer cylindrical part 33, and a front end portion of the heat equalizer 36 is in contact with the end face part 35 of the roller main body 31. Both rear end portions of the outer cylindrical part 33 and the heat equalizer 36 are fixed to an annular fixing member 37 so that the heat equalizer 36 is fixed to the roller main body 31.

At the shaft center part 34 of the roller main body 31, a shaft inserting hole 34a is formed to extend along the axial direction. To the shaft inserting hole 34a, the output shaft 51 of the motor 50 is fixed by an unillustrated fixing member so that the induction heating roller 30 is rotatable together with the output shaft 51.

The coil 32 is arranged such that conducting wires are wound onto an outer circumferential surface of a cylindrical bobbin member 39. Although not illustrated, the bobbin member 39 is not completely cylindrical in shape and is C-shaped in cross section as a part of the member in the circumferential direction is cut out. Because of this, an eddy current is unlikely to run along the circumferential direction in the bobbin member 39, with the result that heat generation of the bobbin member 39 is restrained. The bobbin member 39 is attached to the housing 52 of the motor 50. An annular recess 52a is formed in the housing 52, and the above-described fixing member 37 is provided in the recess 52a so as not to make contact with a bottom surface and a side surface of the recess 52a. The output shaft 51 of the motor 50 is rotatably supported by the housing 52 via an unillustrated bearing. As the motor 50 is driven, the induction heating roller 30 rotates together with the output shaft 51.

When a high-frequency current is supplied to the coil 32, a variable magnetic field is generated around the coil 32. The induction heating uses Joule heat of the eddy current which flows in the circumferential direction by this electromagnetic induction effect. In the present embodiment, the heat equalizer 36 is discontinuous in the circumferential direction because of the discontinuous area 40 so that the eddy current scarcely flows in the heat equalizer 36. Therefore, Joule heat generated by the eddy current is more generated in the outer cylindrical part 33 than in the heat equalizer 36. The eddy current is generated mainly in the vicinity of the inner circumferential surface of the outer cylindrical part 33, because of the skin effect.

In the present embodiment, the heat conductivity of the heat equalizer 36 is higher than that of the roller main body 31 (outer cylindrical part 33). Therefore, the temperature distribution in the heat equalizer 36 is likely to be equalized, and hence the temperature distribution is equalized in the axial direction in the outer cylindrical part 33 making contact with the heat equalizer 36. In addition to that, the heat equalizer 36 is lower in heat capacity than the outer cylindrical part 33 in order to swiftly equalize the temperature distribution of the heat equalizer 36 in the present embodiment.

### (Effects of First Embodiment)

As described above, the induction heating roller 30 of the first embodiment is provided so as to make contact with the inner circumferential surface of the outer cylindrical part 33 of the roller main body 31, and includes the heat equalizer 36 formed of the electrically conductive material which is higher in the heat conductivity than the outer cylindrical part 33. The heat equalizer 36 is discontinuous in the circumferential direction because of the discontinuous area 40 extending in the axial direction. It is therefore possible to suppress the eddy current from flowing along the circumferential direction in the heat equalizer 36 which is electrically conductive, because of the discontinuous area 40. As a result, because the heat equalizer 36 is unlikely to generate heat, the roller surface 31a (surface of the outer cylindrical part 33) is effectively heated.

In the first embodiment, the heat equalizer 36 is a cylindrical member in which the slit 36a is formed. In other words, the slit 36a formed in the cylindrical heat equalizer 36 functions as the discontinuous area 40. Therefore, the heat equalizer 36 is discontinuous in the circumferential direction because of the slit 36a so as to suppress the eddy current from flowing in the circumferential direction.

In the first embodiment, the slit 36a formed in the cylindrical heat equalizer 36 extends across the entire length in the axial direction of the heat equalizer 36. Therefore, the slit 36a functioning as the discontinuous area 40 extends across the entire length in the axial direction of the heat equalizer 36 so that the heat equalizer 36 is discontinuous in the circumferential direction in all area regarding the axial direction. It is therefore possible to suppress the eddy current from flowing in the circumferential direction in the entirety of the heat equalizer 36 in the axial direction. As a result, the heat equalizer 36 is further unlikely to generate heat, so that the roller surface 31a (surface of the outer cylindrical part 33) is heated further effectively.

In the first embodiment, the insulation film 36b is provided on the entire contact surface where the outer circumferential surface of the heat equalizer 36 makes contact with the outer cylindrical part 33. The insulation film 36b is the lower in heat resistance than the outer cylindrical part 33, and is insulating. It is therefore possible to prevent the eddy current which is generated in the outer cylindrical part 33 by the electromagnetic induction from flowing in the heat equalizer 36, because of the insulating insulation film 36b. It is therefore possible to further suppress the eddy current from flowing in the heat equalizer 36. The heat resistance of the insulation film 36b is relatively low because the thickness of the insulation film 36b is thin. Therefore, the insulation film 36b can fill the following gaps by the insulation film 36b so as to further increase the heat conduction between the outer cylindrical part 33 and the heat equalizer 36: a gap which is formed between the outer cylindrical part 33 and the heat equalizer 36 because of surface roughness of the inner circumferential surface of the outer cylindrical part 33 and the outer circumferential surface of the heat equalizer 36; and a gap which is formed because of the fitting relationship between the outer cylindrical part 33 and the heat equalizer 36.

In the first embodiment, the relative permeability of the heat equalizer 36 is lower than that of the outer cylindrical part 33. Because of this, magnetic fluxes are less likely to pass through the heat equalizer 36 than to pass through the outer cylindrical part 33. It is therefore possible to restrain the eddy current from being generated in the heat equalizer 36 as the magnetic fluxes pass through the heat equalizer 36.

In the spun yarn take-up machine 1 of the first embodiment, the yarns are wound on the surface of the induction heating roller 30 so as to be aligned in the axial direction. As described above, the induction heating roller 30 of the present embodiment can suppress the eddy current from flowing in the heat equalizer 36, restrain the heat equalizer 36 from generating heat, and heat the roller surface 31a (surface of the outer cylindrical part 33) effectively. Therefore, the yarns wound onto the induction heating roller 30 in the spun yarn take-up machine 1 are effectively heatable.

### <Second Embodiment>

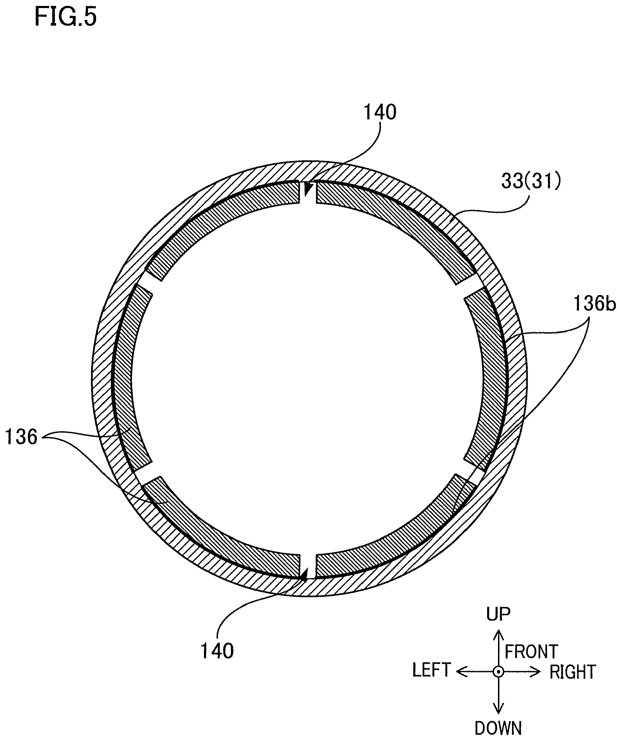

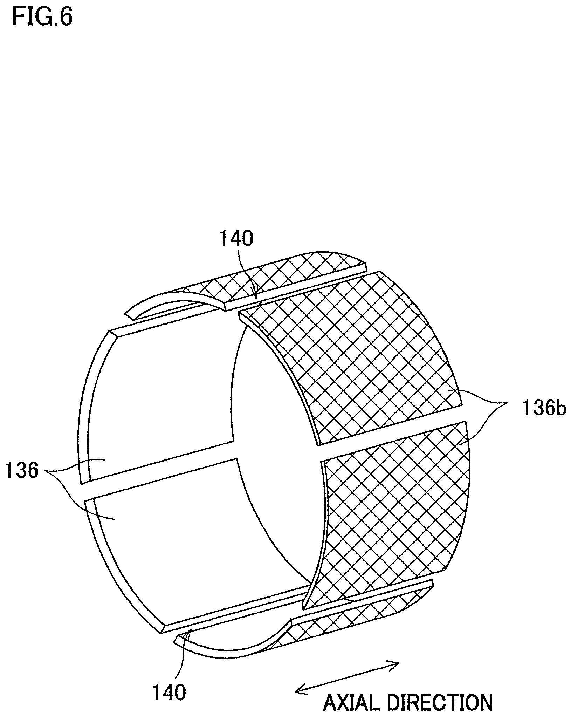

The following will describe a second embodiment of the present invention with reference to FIG. 5 and FIG. 6. FIG. 5 is a cross section of an outer cylindrical portion 33 and heat equalizers 136 of an induction heating roller of a second embodiment of the present invention, which is taken along a direction orthogonal to an axial direction. FIG. 6 is a perspective view of the heat equalizers 136 shown in FIG. 5. The present embodiment is different from the above-described first embodiment, in the structure of the heat equalizers 136. Because structures of other members are substantially identical with those in the above-described first embodiment, the members substantially identical with those in the first embodiment will be denoted by the same reference numerals and the explanations thereof may not be repeated.

The heat equalizers 136 are provided radially inside the outer cylindrical part 33 of the roller main body 31 and radially outside the coil 32, in the same manner as the first embodiment. In the descriptions below, a surface of each heat equalizer 136, which is on the outer cylindrical part 33 side, is referred to as an "outer surface", and a surface of each heat equalizer 136, which is on the coil 32 side, is referred to as an "inner surface".

As shown in FIG. 5 and FIG. 6, each heat equalizer 136 of the present embodiment is a plate member extending along the axial direction, and plural (six at the present embodiment) heat equalizers 136 are provided while being apart from each other in the circumferential direction. The length in the axial direction of each heat equalizer 136 is substantially identical with the length of the outer cylindrical part 33. An area is formed between two heat equalizers 136 which are adjacent to each other in the circumferential direction. The area is a discontinuous area 140 in which the heat equalizers 136 are not provided. In other words, the heat equalizers 136 are discontinuous in the circumferential direction. The material of the heat equalizers 136 is copper and aluminum, etc., similarly to the first embodiment. On the outer surface of each heat equalizer 136, an insulation film 136b is provided in the same manner as the first embodiment.

Each heat equalizer 136 is curved in shape in the circumferential direction, and the curvature of the outer surface to the circumferential direction is substantially identical with the curvature of the inner circumferential surface of the outer cylindrical part 33. Therefore, the outer surface (insulation film 136b) of each heat equalizer 136 makes contact with almost the entire inner circumferential surface of the outer cylindrical part 33.

### (Effects of Second Embodiment)

In the second embodiment, the discontinuous area 140 is provided between two heat equalizers 136 which are adjacent to each other in the circumferential direction. Because of the discontinuous area 140, the heat equalizes 136 are discontinuous in the circumferential direction in the same manner as the first embodiment. It is therefore possible to suppress the eddy current from flowing along the circumferential direction of the heat equalizers 136 which are electrically conductive. As a result, because the heat equalizers 136 are unlikely to generate heat, the roller surface 31a (surface of the outer cylindrical part 33) is effectively heated.

### (Modifications)

The embodiments of the present invention are described hereinabove. However, the specific structure of the present invention shall not be interpreted as to be limited to the above described embodiments. The scope of the present invention is defined not by the above embodiments but by claims set forth below, and shall encompass the equivalents in the meaning of the claims and every modification within the scope of the claims.

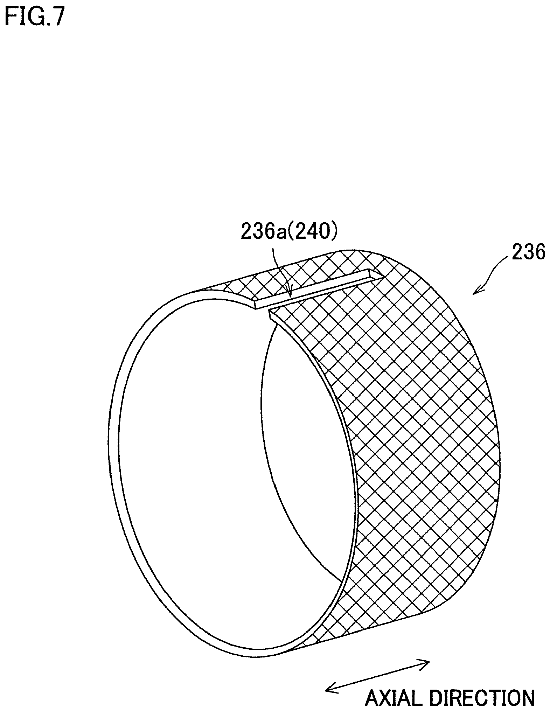

As shown in FIG. 7 which is a perspective view of a heat equalizer 236 of an induction heating roller in a first modification of the first embodiment, for example, the heat equalizer 236 of the induction heating roller of the present modification is continuous throughout the entire circumference of the circumferential direction at one end portion (right end portion shown in FIG. 7) in the axial direction. In other words, a slit 236a which is formed in the heat equalizer 236 so as to extend in the axial direction is not formed at the one end portion in the axial direction of the heat equalizer 236, and extends to the other end portion from the vicinity of the one end portion in the axial direction of the heat equalizer 236. In other words, a discontinuous area 240 extends to the other end portion from the vicinity of the one end portion in the axial direction of the heat equalizer 236 in the axial direction, in the present modification. As such, the cylindrical heat equalizer 236 has the part which is continuous throughout the entire circumference of the circumferential direction. It is therefore possible to easily maintain the shape of the heat equalizer 236 and to facilitate the mounting of the heat equalizer 236.

In this regard, heat is generated at the part which is continuous throughout the entire circumference of the circumferential direction of the heat equalizer 236 because the eddy current flows in the circumferential direction. Preferably, the heat generating area of the heat equalizer 236 is narrow in order to effectively heat the roller surface 31a (surface of the outer cylindrical part 33). Therefore, it is preferable that the width (axial length) of the part which is continuous throughout the entire circumference of the circumferential direction is narrow, in order to narrow the heat generating area.

The part which is continuous throughout the entire circumference of the circumferential direction of the heat equalizer 236 may be provided at either end portion in the axial direction, or may be provided at both end portions in the axial direction (front-rear direction) . Alternatively, this part may be provided at an intermediate portion in the axial direction.

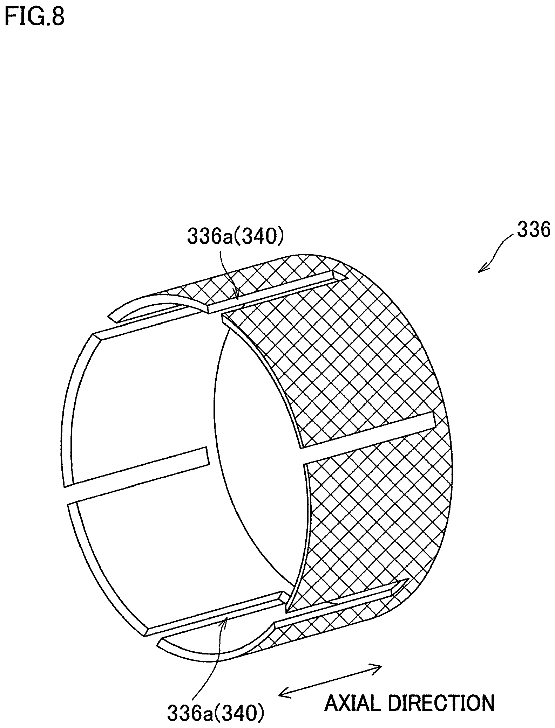

As shown in FIG. 8 which is a perspective view of a heat equalizer 336 of an induction heating roller in a second modification of the first embodiment, the heat equalizer 336 of the induction heating roller of the present modification is continuous throughout the entire circumference of the circumferential direction at one end portion (right end portion shown in FIG. 8) in the axial direction. In the heat equalizer 336, plural (six in the present modification) slits 336a are formed so as to extend in the axial direction. In other words, each slit 336a which is formed in the heat equalizer 336 so as to extend in the axial direction is not formed at the one end portion in the axial direction of the heat equalizer 336, and extends to the other end portion from the vicinity of the one end portion in the axial direction of the heat equalizer 336. In other words, plural (six in the present modification) discontinuous areas 340 extend to the other end portion from the vicinity of the one end portion in the axial direction of the heat equalizer 336 in the axial direction, in the present modification. The slits 336a (discontinuous areas 340) are provided at regular intervals in the circumferential direction.

When the cylindrical heat equalizer 336 with the slits 336a has the part which is continuous throughout the entire circumference of the circumferential direction, heat is generated at this part of the heat equalizer 336, because the eddy current flows in the part in the circumferential direction. In this regard, an area from which heat is generated increases in size in the circumferential direction away from the slits 336a. In other words, the axial length of the area from which heat is generated increases in the circumferential direction away from the slits 336a. Therefore, it is possible to suppress the increase in size of the area from which the heat equalizer 336 generates heat, by providing the plural slits 336a.

The number of the slits 336a formed in the heat equalizer 336 is not limited to six. As described above, the heat generating area can be further narrowed as the number of the slits 336a is increased, in order to narrow the heat generating area of the heat equalizer 336. However, the strength of the heat equalizer 336 can be kept high when the number of the slits 336a is small. In addition to that, the slits 336a may not be provided at regular intervals. Furthermore, the part which is continuous throughout the entire circumference of the circumferential direction of the heat equalizer 336 may be provided at either end portion in the axial direction, or may be provided at both end portions in the axial direction (front-rear direction). Alternatively, this part may be continuous throughout the entire circumference of the circumferential direction at an intermediate portion in the axial direction.

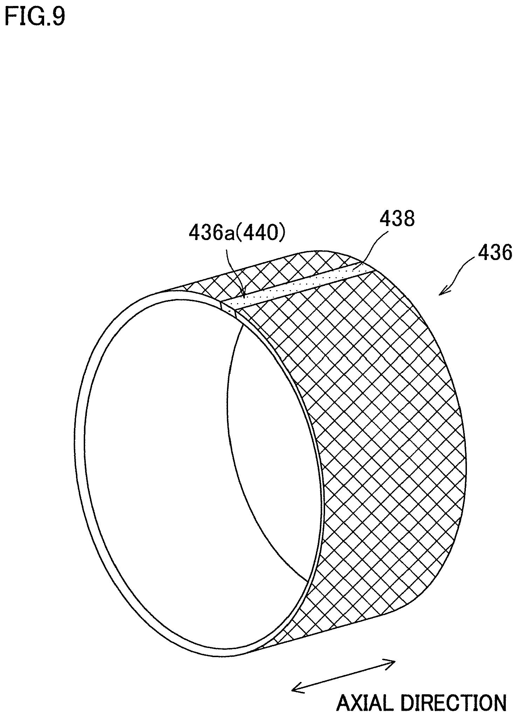

As shown in FIG. 9 which is a perspective view of a heat equalizer 436 of an induction heating roller in the third modification of the first embodiment, a spacer 438 is provided in a slit 436a (discontinuous area 440) in the heat equalizer 436 of the induction heating roller of the present modification. The spacer 438 is formed of an insulating material such as synthetic resin. In this regard, it is preferable that the spacer 438 is thin and has low heat resistance, in order to maintain the effect of equalizing the temperature distribution in the axial direction of the outer cylindrical part 33.

As such, the shape of the heat equalizer 436 is easily maintained and the mounting of the heat equalizer 436 is facilitated by providing the spacer 438 at the discontinuous area 440 which is a gap formed in the heat equalizer 436. The spacer 438 is formed of the insulating material, and this makes it possible to maintain the effect of suppressing the eddy current from flowing in the circumferential direction of the heat equalizer 436.

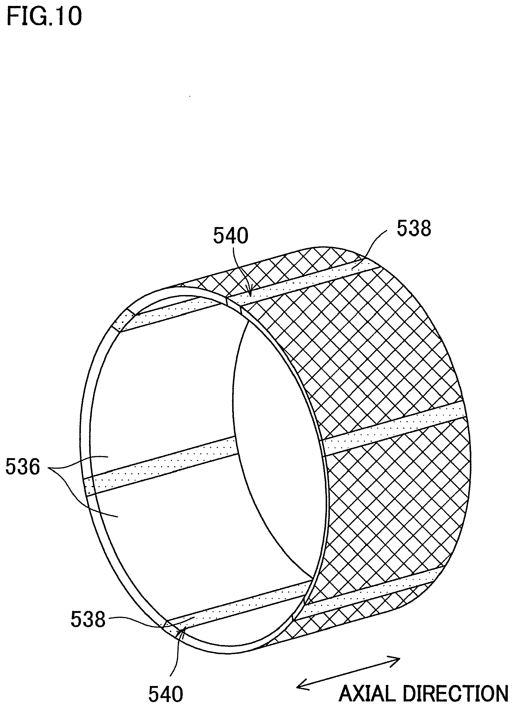

As shown in FIG. 10 which is a perspective view of a heat equalizer 536 of an induction heating roller in one modification of the second embodiment, spacers 538 are provided at discontinuous areas 540 in the heat equalizer 536 of the induction heating roller of the present modification in the same manner as the third modification of the first embodiment. The spacers 538 are formed of an insulating material such as synthetic resin.

While in the embodiments above the discontinuous area 40 (140, 240, 340, 440, 540) extends along the axial direction, the disclosure is not limited to this. In other words, the extending direction of the discontinuous area 40 (140, 240, 340, 440, 540) may be any directions on condition that the direction intersects with the circumferential direction.

While in the embodiments above the insulation film 36b (136b) is provided at the contact surface where the heat equalizer 36 (136, 236, 336, 436, 536) makes contact with the outer cylindrical part 33, the insulation film 36b (136b) may not be provided.

While in the embodiments above the heat equalizer 36 (136, 236, 336, 436, 536) is lower in relative permeability than the outer cylindrical part 33 (roller main body 31), the relative permeability of the heat equalizer 36 (136, 236, 336, 436, 536) is not limited to this.

While in the embodiments above the heat equalizer 36 is higher in heat conductivity than the roller main body 31, the disclosure is not limited to this. The heat equalizer 36 may be higher in heat conductivity than at least the inner circumferential surface of the outer cylindrical part 33 of the roller main body 31.

In the embodiments above, the roller main body 31 is formed of carbon steel which is a magnetic body and a conductor, and the outer cylindrical part 33, the shaft center part 34, and the end face part 35 are integrally formed. However, the disclosure is not limited to this. The outer cylindrical part 33 and the end face part 35 may be made of different materials on condition that each of the outer cylindrical part 33 and the end face part 35 is made of a material which is a magnetic body and a conductor. Furthermore, the outer cylindrical part 33 and the end face part 35 may be different members even when the outer cylindrical part 33 and the end face part 35 are made of the same material which is a magnetic body and a conductor.

While in the embodiments above the yarns Y are wound onto one induction heating roller 30, the present invention is applicable to an induction heating roller onto which one yarn is wound.

### [Reference Signs List]

1: spun yarn take-up machine
30: induction heating roller
32: coil
33: outer cylindrical part (heating target)
36, 136, 236, 336, 436, 536: heat equalizer
36a, 236a, 336a, 436a: slit
36b, 136b: insulation film
40, 140, 240, 340, 440, 540: discontinuous area
438, 538: spacer

## Claims

1. An induction heating roller (30) comprising: a coil (32); a heating target (33) which is cylindrical in shape, which is provided radially outside the coil, and which is induction-heatable by the coil; and at least one heat equalizer (36, 136, 236, 336, 436, 536) which is made of an electrically conductive material which is higher in heat conductivity than at least an inner circumferential surface of the heating target, the at least one heat equalizer extending in an axial direction of the heating target, and the at least one heat equalizer being provided so as to make contact with the inner circumferential surface of the heating target, **characterised in that** the at least one heat equalizer is discontinuous in the circumferential direction because of at least one discontinuous area (40, 140, 240, 340, 440, 540) which is provided in a circumferential direction of the heating target and which extends in a direction which intersects with the circumferential direction.

2. The induction heating roller according to claim 1, wherein, the at least one heat equalizer is a cylindrical member in which at least one slit (36a, 236a, 336a, 436a) is formed at a part corresponding to the at least one discontinuous area.

3. The induction heating roller according to claim 2, wherein, the at least one heat equalizer is continuous throughout an entire circumference of the circumferential direction in at least one of both end portions in the axial direction.

4. The induction heating roller according to claim 3, comprising two or more slits.

5. The induction heating roller according to claim 2, wherein, the at least one slit extends across an entire length of the heat equalizer in the axial direction.

6. The induction heating roller according to claim 1, comprising two or more heat equalizers which are apart from each other in the circumferential direction, wherein
the at least one discontinuous area is provided between two of the two or more heat equalizers which are adjacent in the circumferential direction.

7. The induction heating roller according to any one of claims 1 to 6, wherein, a spacer (438, 538) made of an insulating material is provided in the at least one discontinuous area.

8. The induction heating roller according to any one of claims 1 to 7, wherein, an insulation film (36b, 136b) which is lower in heat resistance than the heating target and which is insulating is provided on a contact surface of the at least one heat equalizer where the at least one heat equalizer makes contact with the heating target.

9. The induction heating roller according to any one of claims 1 to 8, wherein, the at least one heat equalizer is lower in relative permeability than the heating target.

10. The induction heating roller according to any one of claims 1 to 9, wherein the heat equalizer is lower in heat capacity than the heating target.

11. A spun yarn take-up machine (1) comprising the induction heating roller according to any one of claims 1 to 10, wherein, yarns are wound onto a surface of the induction heating roller so as to be aligned in the axial direction.

## Patentansprüche

1. Induktionsheizwalze (30), umfassend:
eine Spule (32);
ein zylindrisch geformtes Heizziel (33), das radial außerhalb der Spule bereitgestellt ist und durch die Spule induktiv erwärmt werden kann; und
mindestens einen Wärmeausgleicher (36, 136, 236, 336, 436, 536), der aus einem elektrisch leitfähigen Material besteht, das eine höhere Wärmeleitfähigkeit aufweist als mindestens eine innere Umfangsfläche des Heizziels, wobei sich der mindestens eine Wärmeausgleicher in einer axialen Richtung des Heizziels erstreckt, und der mindestens eine Wärmeausgleicher so bereitgestellt ist, dass er mit der inneren Umfangsfläche des Heizziels in Kontakt steht, **dadurch gekennzeichnet, dass** der mindestens eine Wärmeausgleicher in Umfangsrichtung unterbrochen ist aufgrund mindestens eines diskontinuierlichen Bereichs (40, 140, 240, 340, 440, 540), der in einer Umfangsrichtung des Heizziels bereitgestellt ist und der sich in einer Richtung erstreckt, die die Umfangsrichtung schneidet.

2. Induktionsheizwalze nach Anspruch 1, wobei der mindestens eine Wärmeausgleicher ein zylindrisches Element ist, in dem mindestens ein Schlitz (36a, 236a, 336a, 436a) an einem Teil ausgebildet ist, der dem mindestens einen unterbrochenen Bereich entspricht.

3. Induktionsheizwalze nach Anspruch 2, wobei der mindestens eine Wärmeausgleicher über den gesamten Umfang in Umfangsrichtung in mindestens einem der beiden Endabschnitte in axialer Richtung durchgehend ist.

4. Induktionsheizwalze nach Anspruch 3, umfassend zwei oder mehr Schlitze.

5. Induktionsheizwalze nach Anspruch 2, wobei sich der mindestens eine Schlitz über die gesamte Länge des Wärmeausgleichers in axialer Richtung erstreckt.

6. Induktionsheizwalze nach Anspruch 1, umfassend zwei oder mehr Wärmeausgleicher, die in der Umfangsrichtung voneinander beabstandet sind, wobei der mindestens eine unterbrochene Bereich zwischen zwei der zwei oder mehr Wärmeausgleicher, die in der Umfangsrichtung benachbart sind, bereitgestellt ist.

7. Induktionsheizwalze nach einem der Ansprüche 1 bis 6, wobei in dem mindestens einen unterbrochenen Bereich ein Abstandshalter (438, 538) aus einem isolierenden Material bereitgestellt ist.

8. Induktionsheizwalze nach einem der Ansprüche 1 bis 7, **dadurch gekennzeichnet, dass** ein Isolierfilm (36b, 136b), der einen geringeren Wärmewiderstand als das Heizziel aufweist und isolierend ist, auf einer Kontaktfläche des mindestens einen Wärmeausgleichers bereitgestellt ist, wo der mindestens eine Wärmeausgleicher mit dem Heizziel in Kontakt steht.

9. Induktionsheizwalze nach einem der Ansprüche 1 bis 8, wobei der mindestens eine Wärmeausgleicher eine geringere relative Permeabilität aufweist als das Heizziel.

10. Induktionsheizwalze nach einem der Ansprüche 1 bis 9, wobei der Wärmeausgleicher eine geringere Wärmekapazität als das Heizziel aufweist.

11. Spinnfadenaufwickelmaschine (1) umfassend die Induktionsheizwalze nach einem der Ansprüche 1 bis 10, **dadurch gekennzeichnet, dass** die Fäden so auf eine Oberfläche der Induktionsheizwalze gewickelt werden, dass sie in axialer Richtung ausgerichtet sind.

## Revendications

1. Rouleau de chauffage par induction (30) comprenant :
une bobine (32) ;
une cible de chauffage (33) qui est de forme cylindrique, qui est disposée radialement à l'extérieur de la bobine, et qui peut être chauffée par induction par la bobine ; et
au moins un égaliseur de chaleur (36, 136, 236, 336, 436, 536) qui est composé d'un matériau électroconducteur qui présente une conductibilité de chaleur plus élevée qu'au moins une surface circonférentielle intérieure de la cible de chauffage, le au moins un égaliseur de chaleur s'étendant dans une direction axiale de la cible de chauffage, et le au moins un égaliseur de chaleur étant disposé de manière à créer un contact avec la surface circonférentielle intérieure de la cible de chauffage, **caractérisé en ce que** le au moins un égaliseur de chaleur est discontinu dans la direction circonférentielle à cause d'au moins une zone discontinue (40, 140, 240, 340, 440, 540) qui est disposée dans une direction circonférentielle de la cible de chauffage et qui s'étend dans une direction qui croise la direction circonférentielle.

2. Rouleau de chauffage par induction selon la revendication 1, dans lequel le au moins un égaliseur de chaleur est un élément cylindrique dans lequel au moins une fente (36a, 236a, 336a, 436a) est formée au niveau d'une partie correspondant à la au moins une zone discontinue.

3. Rouleau de chauffage par induction selon la revendication 2, dans lequel le au moins un égaliseur de chaleur est continu sur une circonférence entière de la direction circonférentielle dans au moins une des deux parties d'extrémité dans la direction axiale.

4. Rouleau de chauffage par induction selon la revendication 3, comprenant deux fentes ou plus.

5. Rouleau de chauffage par induction selon la revendication 2, dans lequel la au moins une fente s'étend à travers une longueur entière de l'égaliseur de chaleur dans la direction axiale.

6. Rouleau de chauffage par induction selon la revendication 1, comprenant deux égaliseurs de chaleur ou plus qui sont espacés les uns des autres dans la direction circonférentielle, dans lequel la au moins une zone discontinue est disposée entre deux des deux égaliseurs de chaleur ou plus qui sont adjacents dans la direction circonférentielle.

7. Rouleau de chauffage par induction selon l'une quelconque des revendications 1 à 6, dans lequel un écarteur (438, 538) composé d'un matériau isolant est disposé dans la au moins une zone discontinue.

8. Rouleau de chauffage par induction selon l'une quelconque des revendications 1 à 7, dans lequel un film d'isolation (36b, 136b) qui présente une résistance à la chaleur plus faible que celle de la cible de chauffage et qui est isolant est disposé sur une surface de contact du au moins un égaliseur de chaleur où le au moins un égaliseur de chaleur crée un contact avec la cible de chauffage.

9. Rouleau de chauffage par induction selon l'une quelconque des revendications 1 à 8, dans lequel le au moins un égaliseur de chaleur présente une perméabilité relative inférieure à celle de la cible de chauffage.

10. Rouleau de chauffage par induction selon l'une quelconque des revendications 1 à 9, dans lequel le au moins un égaliseur de chaleur présente une capacité de chaleur plus faible que celle de la cible de chauffage.

11. Machine de tension de filés (1) comprenant le rouleau de chauffage par induction selon l'une quelconque des revendications 1 à 10, dans laquelle des fils sont enroulés sur une surface du rouleau de chauffage par induction de manière à être alignés dans la direction axiale.
